# EUROPÄISCHE PATENTANMELDUNG

(11) **EP 0 911 534 A1**
(43) Veröffentlichungstag der Anmeldung: **28.04.1999**
(21) Anmeldenummer: 98117897.3
(22) Anmeldetag: 22.09.1998
(51) Int. Cl.: F16B 12/46

(54) **Möbelstück aus Holz**

(30) Priorität: 24.10.1997 DE 19747362
(71) Anmelder: Döring, Joseph, 39218 Schönebeck (DE)
(72) Erfinder: Seeland, Peter, 37130 Gleichen-Bremke (DE)
(74) Vertreter: Patentanwälte Rehberg + Hüppe

(57) **Zusammenfassung**

Das Möbelstück aus Holz weist mindestens eine Raumecke (19) auf, in der drei abgesetzte Stabelemente (1) zusammengefügt sind, die zumindest im Bereich ihrer Zusammenfügung einen identischen und rechteckigen Grundquerschnitt mit dem Verhältnis seiner Querschnittskanten (2, 3) von 2:3 aufweisen. Jedes Stabelement (1) weist endseitig parallel zu den kürzeren Querschnittskanten (2) einen durchgehenden und mittig angeordneten Schlitz (10) auf, dessen Tiefe dem Maß der längeren Querschnittskante (3) und dessen Breite einem Drittel des Maßes der längeren Querschnittskante (3) entspricht. Jedes Stabelement (1) weist endseitig parallel zu den längeren Querschnittskanten (3) eine durchgehende und an eine längere Querschnittskante (3) anschließende Absetzung auf, deren Tiefe dem Maß der kürzeren Querschnittskante (2) und dessen Breite der Hälfte des Maßes der kürzeren Querschnittskante (2) entspricht. Die abgesetzten Stabelemente (1) weisen in zusammengefügtem Zustand eine gemeinsame, jedes Stabelement (1) anschneidende Bohrung (22) auf, die in einem Winkel zu dem durch die drei Stabelemente (1) aufgespannten Achsensystem angeordnet ist. Es ist ein in die Bohrung (22) einsetzbarer Dübel (23) vorgesehen.

## Beschreibung

Die Erfindung bezieht sich auf ein Möbelstück aus Holz mit mindestens einer Raumecke, in der drei abgesetzte Stabelemente zusammengefügt sind, die zumindest im Bereich ihrer Zusammenfügung einen identischen und rechteckigen Grundquerschnitt mit dem Verhältnis seiner Querschnittskanten von 2:3 aufweisen, wobei jedes Stabelement endseitig parallel zu den kürzeren Querschnittskanten einen durchgehenden und mittig angeordneten Schlitz aufweist, dessen Tiefe dem Maß der längeren Querschnittskante und dessen Breite einem Drittel des Maßes der längeren Querschnittskante entspricht, und wobei jedes Stabelement endseitig parallel zu den längeren Querschnittskanten eine durchgehende und an eine längere Querschnittskante anschließende Absetzung aufweist, deren Tiefe dem Maß der kürzeren Querschnittskante und dessen Breite der Hälfte des Maßes der kürzeren Querschnittskante entspricht. Es gibt bekanntlich zahlreiche Möbelstücke aus Holz, die in der Regel eine Mehrzahl von Raumecken aufweisen. Unter einer Raumecke wird eine Ecke verstanden, in der drei Stabelemente jeweils endend zusammengefügt sind, wobei die Stabelemente in der Regel in Winkeln von 90° zueinander entsprechend den Raumachsen eines Koordinatensystems angeordnet sind. Solche Raumecken werden z. B. bei Untergestellen für Tische, bei Bettgestellen, bei Stühlen, Hockern, aber auch bei Regalen und anderen Möbelwandteilen angewendet und eingesetzt. In der Regel wird die Raumecke, die auch als Knotenverbindung bezeichnet werden könnte, fest, d. h. dauerhaft zusammengefügt, wobei letztendlich eine Verleimung zwischen den einander anschließenden Stabelementen durchgeführt wird. Um ein mobiles, montier- und demontierbares Möbelstück zu schaffen, kann aber auch auf diese Verleimung verzichtet werden, so daß die Stabelemente lediglich ineinandersteckbar sind.

Ein Möbelstück der eingangs beschriebenen Art ist aus dem DE-GM 87 11 543 bekannt. An ihnen finden Stabelemente Verwendung, die in einer Raumecke zusammentreffen und einander teilweise durchdringen. Dabei kommt es auf die abgesetzte Bearbeitung der Stabelemente in dem Endbereich oder Durchdringungsbereich an. Die Stabelemente weisen zumindest im Bereich ihrer Zusammenfügung einen identischen und rechteckigen Grundquerschnitt mit dem Verhältnis seiner Querschnittskanten von 2:3 auf. Jedes Stabelement weist endseitig parallel zu den kürzeren Querschnittskanten einen durchgehenden und mittig angeordneten Schlitz auf, dessen Tiefe dem Maß der längeren Querschnittskante und dessen Breite einem Drittel des Maßes der längeren Querschnittskante entspricht. Weiterhin weist jedes Stabelement endseitig parallel zu den längeren Querschnittskanten eine durchgehende und an eine längere Querschnittskante anschließende Absetzung auf, deren Tiefe dem Maß der kürzeren Querschnittskante und deren Breite der Hälfte des Maßes der kürzeren Querschnittskante entspricht. Die Stabelemente sind zunächst einmal im Bereich ihrer Durchdringung identisch ausgebildet, so daß diese Enden der Stabelemente in einfacher Weise bearbeitet und in Serie zugerichtet werden können. Die Seitenkanten des Querschnitts müssen also in diesem Verhältnis stehen, und zwar im Durchdringungsbereich, während die Stabelemente außerhalb des Durchdringungsbereichs der Raumecke entweder ihren rechteckigen Querschnitt beibehalten können oder aber auch quadratischen oder sonstigen Querschnitt, z. B. abgerundete Form, aufweisen können. Jedes Stabelement weist einen durchgehenden Schlitz auf, der mittig, also symmetrisch zu einer Mittelebene, parallel und zwischen der Erstreckung der Seitenflächen angeordnet ist, die durch die kürzeren Querschnittskanten bzw. die schmalere Seite des Querschnitts bestimmt sind. Dieser Schlitz muß von der Endfläche des Stabelements aus gesehen eine Tiefe aufweisen, die dem Maß der längeren Querschnittskante entspricht. Der Schlitz nimmt gleichsam das mittlere Drittel des Materials weg, wenn man auf die größere Querschnittsfläche des Stabelements blickt. Die Breite dieses Schlitzes beträgt genau ein Drittel des Maßes der längeren Querschnittskante und entspricht damit der Hälfte des Maßes der kürzeren Querschnittskante. Dies genügt jedoch noch nicht für die Verbindung. Das Stabelement muß zusätzlich im Endbereich und unter Überdeckung mit dem Schlitz eine durchgehende Absetzung aufweisen, die nicht symmetrisch angeordnet ist, sondern auf einer Außenseite mit der längeren Querschnittskante beginnt und sich bis zu einer Mittelebene zwischen den Flächen, die durch die längeren Querschnittskanten festgelegt sind, erstreckt. Jedes Stabelement ist also einseitig abgesetzt, wobei die Tiefe dieser Absetzung dem Maß der kürzeren Querschnittskante und damit zwei Dritteln der längeren Querschnittskante entspricht. Die Breite dieser Absetzung entspricht der Hälfte des Maßes der kürzeren Querschnittskante und damit einem Drittel des Maßes der längeren Querschnittskante. Die Absetzung ist damit nicht so tief wie der Schlitz. Diese an sich eigentümliche Gestaltung gestattet es, die drei Stabelemente zusammenzufügen, wobei beim Zusammenfügen von zunächst zwei Stabelementen nur eine Festlegung der Stabelemente zueinander in einer Ebene geschieht, während erst nach dem Einstecken des dritten Stabelements die Winkelstabilität nach allen Richtungen erreicht wird. Es versteht sich, daß die Zusammenfügung der Stabelemente in Richtung ihrer Haupterstreckungsrichtung, also in Achsrichtung zueinander, erfolgt. Es entsteht damit ein fester winkeltreuer Verbund in der Raumecke, der durch eine Verleimung oder Verklebung dauerhaft fixiert werden kann. Die durch die drei zusammengefügten Stabelemente gebildete Raumecke besitzt jedoch nicht nur eine erhebliche Festigkeit und Winkeltreue, sondern weist auch ein formschönes Aussehen auf. Nach dem Zusammenfügen der drei Stabelemente ergibt sich auf der Außenseite der Raumecke ein würfelförmiger Hohlraum, der manchmal als geschmacklich störend empfunden wird. Um diesem Nachteil entgegenzuwirken, ist bereits versucht worden, die Ecke abzuschneiden bzw. abzuflachen. Ein dauerhafter Zusammenhalt der drei zusammengefügten Stabelemente ergibt sich beispielsweise durch eine Verleimung. Diese Verleimung ist aber hinderlich, wenn das Möbelstück auseinandergebaut werden soll.

Der Erfindung liegt die Aufgabe zugrunde, ein Möbelstück der eingangs beschriebenen Art aufzuzeigen, welches mindestens eine Raumecke aufweist, in der drei abgesetzte Stabelemente dauerhaft haltend zusammengefügt sind und trotzdem eine Demontierbarkeit gegeben ist. Die aus drei Stabelementen zusammengefügte Raumecke soll gesichert werden, wobei die Sicherung bei Bedarf auch wieder aufgehoben werden soll. Nach Möglichkeit sollen Ausnehmungen, insbesondere im Außenbereich der Raumecke, vermieden werden.

Erfindungsgemäß wird dies dadurch erreicht, daß die abgesetzten Stabelemente in zusammengefügtem Zustand eine gemeinsame, jedes Stabelement anschneidende Bohrung aufweisen, die in einem Winkel zu dem durch die drei Stabelemente aufgespannten Achsensystem angeordnet ist, und daß ein in die Bohrung einsetzbarer Dübel vorgesehen ist.

Die Erfindung geht von dem Gedanken aus, die Stabelemente mit einer gemeinsamen Bohrung zu versehen, die vorzugsweise erst dann eingebracht wird, wenn die abgesetzten Stabelemente zusammengefügt sind. Dabei ist es erforderlich, die Bohrung in einem solchen Winkel schräg zu den drei Stabelementen einzubringen, daß jedes Stabelement durch die Bohrung angeschnitten wird. In die Bohrung wird dann ein Dübel eingetrieben, wobei der Durchmesser der Bohrung und der Durchmesser des Dübels so aufeinander abgestimmt sind, daß vorzugsweise eine Preßpassung erreicht wird und der Dübel aufgrund der Reibung in der Bohrung seinen eingetriebenen Platz von selbst nicht verläßt. Der Dübel stellt gleichsam ein Sicherungsmittel dar, welches verhindert, daß die Zusammenfügung der Stabelemente ohne vorherige Entfernung des Dübels demontierbar ist. Der Dübel kann in Form eines zylindrischen Stabes vorgesehen sein, insbesondere auch aus Holz, aber auch aus Kunststoff oder dergleichen. Wenn das Möbelstück demontiert werden soll, wird der Dübel aus der Bohrung herausgeschlagen oder herausgezogen, sofern es sich um eine Sackbohrung handelt. Anschließend kann die Zusammenfügung der drei Stabelemente aufgehoben werden, indem ein Stabelement nach dem anderen aus den jeweils verbleibenden Stabelementen herausgezogen werden. Sofern es sich um ein Möbelstück handelt, welches nicht mehr demontiert werden soll oder muß, ergibt sich natürlich auch die Möglichkeit, den Dübel in die Bohrung einzuleimen und/oder die abgesetzten Stabelemente an den so gebildeten Flächen miteinander zu verleimen. Es ist nicht unbedingt erforderlich, daß die Bohrung durchgehend die aus den abgesetzten Stabelementen zusammengefügte Raumecke durchsetzt. Eine durchgehende Bohrung bietet in handhabungstechnischer Hinsicht entsprechende Vorteile. Es ist aber auch möglich, lediglich eine Sackbohrung zu verwenden, wobei diese Sackbohrung entweder von der Innenseite der Raumecke oder von der Außenseite der Raumecke ausgehend und damit zugänglich vorgesehen sein kann.

Der Dübel kann als Spreizdübel ausgebildet und auf den Durchmesser der Bohrung abgestimmt sein. Bei dem Dübel muß es sich nicht unbedingt um ein Zylinderstück eines Holzstabes handeln. Es ist auch möglich, einen Spreizdübel zu verwirklichen, also z. B. ein aus Kunststoff bestehendes Element, welches unter Spreizwirkung in die Bohrung eingetrieben bzw. eingesetzt werden kann. Damit entsteht innerhalb der Raumecke eine Vorspannung, mit der die Stabelemente winkelgetreu und paßgenau gehalten sind.

Zum Ausfüllen eines würfelförmigen Hohlraums der zu einer Raumecke zusammengefügten Stabelemente kann an dem Dübel ein Kopf vorgesehen sein. Unter dem Kopf an dem Dübel wird eine Verdickung verstanden, die verschiedene geometrische Gestalt aufweisen kann. Insbesondere ist es möglich, die Verdickung würfelförmig zu gestalten, und zwar mit den Abmessungen, die der würfelförmige Hohlraum aufweist, der sich auf der Außenseite der Raumecke nach dem Zusammenfügen der drei Stabelemente bildet. In diesem Falle wird die Raumecke nach Außen geschlossen bzw. durch den Kopf des Dübels so ergänzt, daß der würfelförmige Hohlraum verschwindet. Insoweit wird nicht nur die Sicherungsfunktion erreicht, sondern auch ein dekoratives Aussehen herbeigeführt, so daß der Nachteil des würfelförmigen Hohlraumes auf der Außenseite verschwindet.

Es ist aber auch möglich, den Kopf anders zu gestalten und/oder auf der Innenseite der Raumecke anzuordnen, also an einer Stelle, die normalerweise für eine freie Draufsicht nicht zugänglich ist. Es ist aber durchaus auch möglich, den Kopf in seinen Dimensionen größer zu gestalten, als den sich beim Zusammenfügen der Stabelemente bildenden würfelförmigen Hohlraum. Der Kopf kann entweder so belassen bleiben, was in dekorativer Hinsicht entsprechende Akzente setzt. Eine andere Möglichkeit besteht darin, den Kopf nach dem Einsetzen des Dübels entsprechend der Außenkonfiguration der Stabelemente an der Raumecke abzuschneiden bzw. zu schleifen.

Die Bohrung kann mit ihrer Achse in dem Mittelwinkel zu dem durch die drei Stabelemente aufgespannten Achsensystem angeordnet sein. Unter diesem Mittelwinkel, in dem die Achse der Bohrung angeordnet ist, wird der eine Winkel verstanden, der mit den drei durch jeweils zwei benachbarte Stabelemente aufgespannten Ebenen im gleichen Winkel angeordnet ist. Es gibt also nur einen einzigen solchen Mittelwinkel. Wenn die Bohrung mit ihrer Achse in diesem Mittelwinkel ausgeführt ist, werden durch die Bohrung sämtliche drei Stabelemente in gleicher Weise angeschnitten, d. h. die Stabelemente stimmen auch hinsichtlich ihres jeweiligen Anschnittes durch die Bohrung überein. Hierauf ist es auch zurückzuführen, daß dann die Stabelemente bei gleicher Ausbildung im Links- oder im Rechtsdrehsinne verbaut bzw. angeordnet werden können. Die Bohrung sollte einen gewissen Mindestdurchmesser aufweisen, beispielsweise mindestens 6, besser 8 oder 10 mm Durchmesser, damit aus den abgesetzten Stabenden entsprechend großflächige Bereiche ausgeschnitten werden, an denen dann der Dübel in Kontakt kommt.

Die Bohrung kann durchgehend oder als Sackloch vorgesehen sein. Wenn die Bohrung durchgehend gestaltet ist, ergibt sich vorteilhaft die Möglichkeit der Anwendung eines Dübels mit Kopf. Der Dübel kann dann zu Demontagezwecken durch Beaufschlagung seiner Schaftseite ausgetrieben werden. Dies gilt auch für einen von der Innenseite der Raumecke her eingesetzten Dübel. Andererseits besteht die Möglichkeit, die Bohrungen als Sackloch auszubilden, wobei dieses Sackloch entweder von der Außenseite oder von der Innenseite der Raumecke ausgehend vorgesehen sein kann. Der Einsatz des Dübels wird sich je nach dem verfolgten Zweck richten.

Eine weitere interessante Möglichkeit besteht darin, daß die Bohrung als abgesetzte Bohrung ausgebildet ist, wobei der Bohrungsteil mit dem kleineren Durchmesser zur Aufnahme des Schaftes des Dübels und der Bohrungsteil mit dem größeren Durchmesser zur Ausnahme des Kopfes des Dübels vorgesehen ist. Diese abgesetzte Bohrung eröffnet die Möglichkeit, den Kopf des Dübels vergleichsweise größer zu gestalten bzw. auch einfacher herzustellen, insbesondere als Zylinderteil, welches in dieser Form belassen oder aber abgesägt und abgeschliffen werden kann, derart, daß die Außenflächen des Kopfes schließlich mit den Außenflächen der Stabelemente fluchten. Besonders sinnvoll ist es, wenn der Bohrungsteil mit dem größeren Durchmesser der Außenseite der Raumecke zugekehrt angeordnet ist.

Eine weitere Möglichkeit besteht darin, daß die die Raumecke bildenden Stabelemente außen in einem Winkel von 45° abgeflacht sind, so daß sich im zusammengefügten Zustand eine gemeinsame ebene Abschlußfläche ergibt. Auch bei dieser Konstruktion besitzen die drei Stabelemente identische Konfiguration.

Immer wenn die Stabelemente identische ausgebildet sind und auch die Bohrung in dem einzigen Mittenwinkel angeordnet ist, ergibt sich die Möglichkeit, daß die Stabelemente so zusammengefügt sind, daß in der Raumecke die längeren Querschnittskanten im Rechtsdrehsinn oder im Linksdrehsinn aufeinander folgen. Es ist also möglich, drei identisch ausgebildete Stabelemente entweder im Linksdrehsinn oder im Rechtsdrehsinn zusammenzufügen. Das Aussehen der Raumecke ändert sich dadurch nicht. weil auch die Stabelemente identisch ausgebildet sind. Es versteht sich, daß die gemeinsame Bohrung ansich nicht in dem einzigen Mittenwinkel vorgesehen sein könnte. Auch eine andere Schräglage der Achse der Bohrung ist denkbar, wobei jedoch darauf zu achten ist, daß sämtliche Stabelemente durch die Bohrung entsprechend angeschnitten werden, daß der eingesetze Dübel seine Sicherungsfunktion erfüllen kann. Wenn dieser einzige Mittenwinkel verlassen wird, gibt es nur eine richtige Montagerichtung mit festgelegtem Drehsinn.

Der für die abgesetzte Bohrung bestimmte Dübel kann zwei Zylinderbereiche mit entsprechenden unterschiedlichen Durchmessern aufweisen. Diese Zylinderbereiche sind vorzugsweise auf die würfelförmigen Hohlräume abgestimmt. Beim Zusammenfügen der drei Stabelemente ergibt sich ein würfelföriger Hohlraum an der Außenecke des Raumelementes und ein weiterer würfelförmiger Hohlraum etwa in der Mittel des Knotens der Raumecke. Dieser zweite würfelförmige Hohlraum ist im zusammengefügten Zustand nicht sichtbar.

Ausführungsbeispiele der Erfindung sind in den Zeichnungen dargestellt und werden im Folgenden beschrieben. Es zeigen:
- Fig. 1: ein Stabelement einer ersten Ausführungsform in Seitenansicht,
- Fig. 2: das Stabelement gemäß Fig. 1 in Draufsicht,
- Fig. 3: das Stabelement der Fig. 1 und 2 in Stirnansicht,
- Fig. 4: drei zu einer Raumecke zusammengefügte Stabelemente, wie sie anhand der Fig. 1 bis 3 verdeutlicht wurden, versehen mit einer Bohrung,
- Fig. 5: eine Seitenansicht des Dübels, der in der Raumecke der zusammengefügten Stabelemente gemäß Fig. 4 von außen Anwendung findet,
- Fig. 6: die Raumecke gemäß Fig. 4 von außen, versehen mit dem Dübel gemäß Fig. 5,
- Fig. 7: eine Ansicht einer weiteren Ausführungsform einer von Stabelementen zusammengefügten Raumecke mit schräg abgeschnittener äußerer Ecke und einem eingesetzten Dübel,
- Fig. 8: eine Seitenansicht eines abgesetzten Dübels mit zwei Zylinderbereichen,
- Fig. 9: eine Ansicht einer weiteren Ausführungsform des Stabelements, welches an sich im Durchdringungsbereich mit dem Ausführungsbeispiel der Fig. 1 bis 4 überein-stimmt, jedoch außerhalb des Durchdringungsbereichs einen quadratischen Querschnitt aufweist,
- Fig. 10: eine Draufsicht auf das Stabelement gemäß Fig. 9 und
- Fig. 11: eine Stirnansicht des Stabelements gemäß den Fig. 9 und 10.

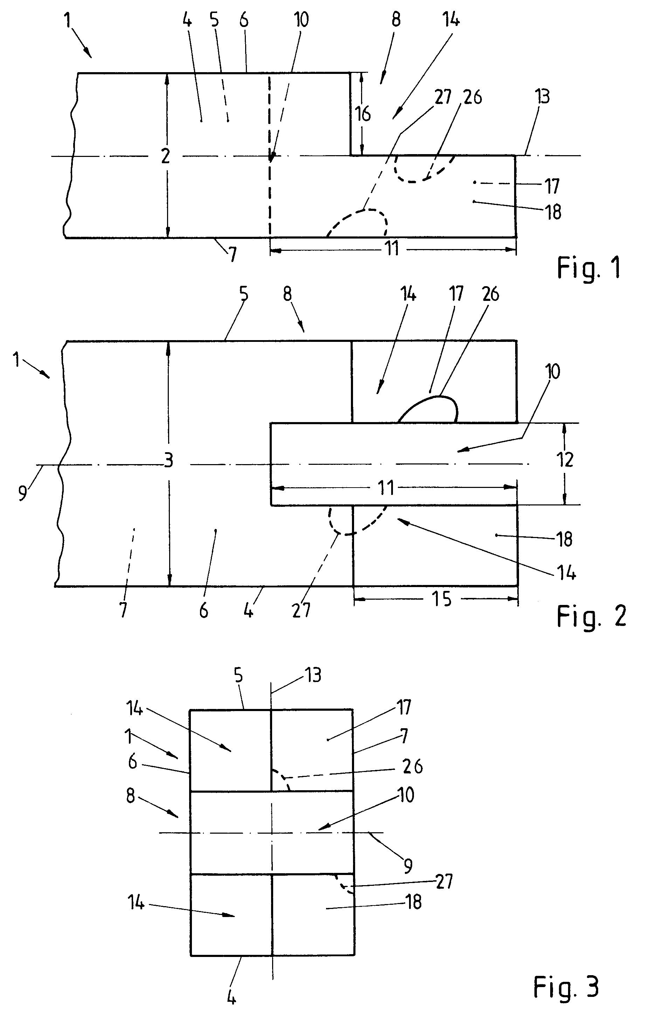

Das in den Fig. 1 bis 3 dargestellte Stabelement 1 besteht vorzugsweise aus Hartholz und ist Bestandteil des Möbelstücks. Es weist einen rechteckigen Grundquerschnitt auf, der eine kürzere Querschnittskante 2 (Fig. 1) und eine längere Querschnittskante 3 (Fig. 2) besitzt, die das Maß der Breite der kürzeren Seitenflächen 4, 5 bzw. der längeren Seitenflächen 6, 7 bestimmen. Wie üblich sind die kürzeren Seitenflächen 4 und 5 zueinander parallel, während sich die längeren Seitenflächen 6, 7 dazu im rechten Winkel, jedoch zueinander auch parallel erstrecken. Die Seitenflächen stehen zueinander im Verhältnis von 2:3, beispielsweise weist die kürzere Querschnittskante 2 das Maß von 4 cm auf, während zugehörig die längere Querschnittskante das Maß von 6 cm aufweist. Am freien Ende des Stabelements 1 ist dieses in einem Durchdringungsbereich 8 bearbeitet, wobei symmetrisch zu einer Mittelebene 9 (Fig. 2) ein Schlitz 10 gebildet ist, dessen Tiefe 11 dem Maß der längeren Querschnittskante 3 und dessen Breite 12 einem Drittel der längeren Querschnittskante 3 und damit der Hälfte der kürzeren Querschnittskante 2 entspricht. Wie Fig. 1 erkennen läßt, ist dieser Schlitz 10 durchgehend vorgesehen und erstreckt sich damit gleichsam parallel zu den kürzeren Seitenflächen 5. Außerdem weist das Stabelement exzentrisch zu einer Mittelebene 13 (Fig. 1) eine Absetzung 14 auf, deren Tiefe 15 dem Maß der kürzeren Querschnittskante 2 und damit zwei Dritteln der längeren Querschnittskante 3 entspricht, während die Breite 16 der Hälfte des Maßes der kürzeren Querschnittskante 2 entspricht. Durch die Überdeckung der Absetzung 14 mit dem Schlitz 10 entstehen am freien Ende des Stabelements gleichsam zwei gabelförmige Zinken 17 und 18, die an sich identisch und symmetrisch zu der Mittelebene 9 angeordnet sind, während sie sich exzentrisch zu der Mittelebene 13 erstrecken.

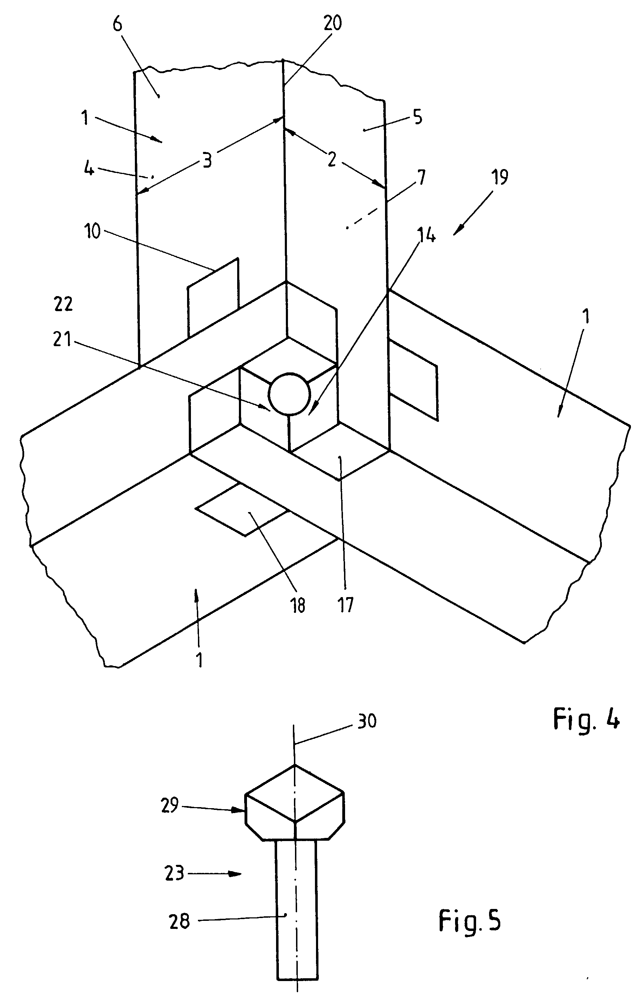

Drei identisch im Durchdringungsbereich 8 ausgebildete Stabelemente 1 lassen sich zu einer Raumecke 19 zusammenstecken, wie dies in Fig. 4 dargestellt ist. Diese Fig. 4 zeigt eine Ansicht von der Außenseite der Raumecke 19, und zwar in einem (einzigen) Mittelwinkel zu dem durch die drei Stabelemente 1 aufgespannten Achsensystem. Man erkennt, daß jeweils die längere Querschnittskante 3 links von der kürzeren Querschnittskante 2 eines jeden Stabelements liegt, was beispielsweise als Linksdrehsinn definiert werden könnte. Die drei Stabelemente 1 sind somit im Linksdrehsinn zusammengesteckt. Um die Übersichtlichkeit zu wahren, sind im wesentlichen nur Bezugszeichen des einen Stabelements 1 angebracht, welches in der Darstellung der Fig. 4 von oben in die Raumecke 19 stößt. Dort, wo sich äußere Kanten 20 der drei Stabelemente 1 treffen würden, befindet sich ein würfelförmiger Hohlraum 21 mit dem Kantenmaß, welches einem Drittel der längeren Querschnittskante 3 entspricht. In sämtlichen anderen Flächen schließen die drei Stabelemente 1 eben aneinander an. Die drei Stabelemente gemäß den Fig. 1 bis 3 lassen sich jedoch auch im Rechtsdrehsinn zu einer Raumecke 19 zusammenfügen, die ähnlich aussieht wie die Darstellung der Fig. 4; jedoch befindet sich dabei die längere Querschnittskante 3 immer rechts neben der kürzeren Querschnittskante 2. Auch hierbei entsteht der Hohlraum 21 am äußersten Punkt der Raumecke 19.

In Figur 4 sind die zusammengefügte drei Stabelemente 1 und die daraus gebildete Raumecke 19 in Draufsicht von außen dargestellt. Es ist eine Bohrung 22 eingebracht, deren Achse mit dem Mittelwinkel zusammenfällt. Die Achse steht senkrecht auf der Zeichenebene. Diese Bohrung 22 schneidet die die Zinken 17 und 18 sämtlicher Stabelemte ein. In den Figuren 1 bis 3 sind die Verschneidungskurven 26 und 27 dargestellt. Es ist erkennbar, daß bei dieser Ausbildung sämtliche drei Stabelemente 1 identisch ausgebildet sind, also durch die eine Bohrung 22 sämtliche sechs Zinken 17, 18 in der verdeutlichten Weise angeschnitten werden.

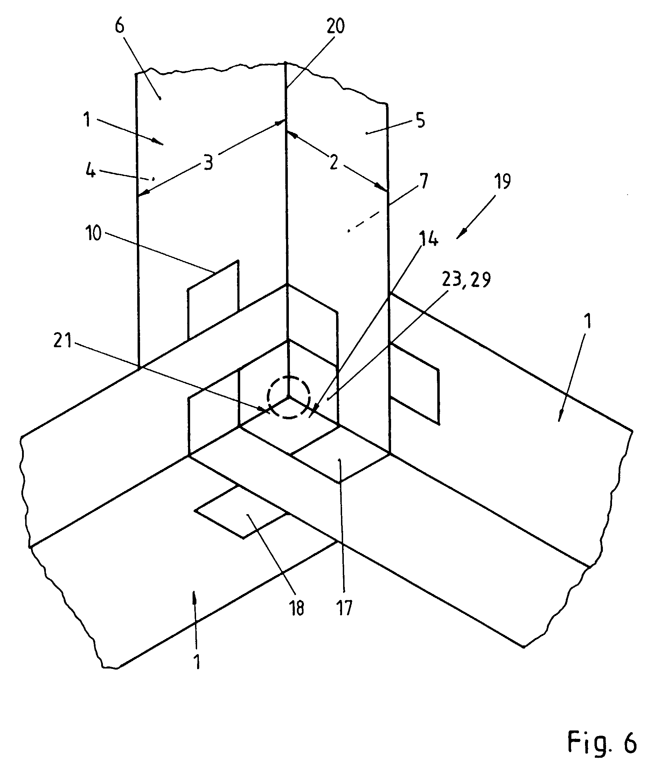

Figur 5 zeigt einen Dübel 23, der einen Schaft 28 aufweist, der zylinderabschnittförmig ausgebildet ist und dessen Durchmesser auf den Durchmesser der Bohrung 22 abgestimmt ist. Der Dübel besitzt auch einen Kopf 29, der in seiner Formgebung auf die Formgebung des würfelförmigen Hohlraums 21 außen an der Raumecke 19 abgestimmt ist, und zwar derart, daß seine verschiedenen Flächen an entsprechende Nachbarflächen der Stabelemente anschließen bzw. zu solchen Flächen fluchten. Der Kopf 29 stellt gleichsam ein Positiv des würfelförmigen Hohlraums 21 dar. Es vesteht sich, daß dieser Dübel 23 mit seiner Achse 30 so an der Raumecke der zusammengefügten Stabelemente 1 eingefügt wird, daß sein Kopf 29 den würfelförmigen Hohlraum 21 ausfüllt. Diese eingesetzte Situation zeigt Figur 6.

Es ist vorstellbar, daß die Bohrung 22 durchgehend oder aber als Sackbohrung ausgebildet sein kann. Bei durchgehender Ausbildung besteht die Möglichkeit, den Dübel 23 von der Innenseite der Raumecke 19 her auszutreiben, also das Sicherungsmittel zu entfernen, um die Stabelemente gemäß ihrer Erstreckungsrichtung wieder auseinander ziehen zu können, also ein demontierbares Möbelstück zu schaffen. Es ist aber auch möglich, die Bohrung 22 als Sackbohrung auszubilden und nach dem Zusammenfügen der Stabelemente einen Dübel 23 aus Holz einzuleimen, wenn auf eine Demontierbarkeit des Möbelstückes verzichtet werden soll. Die Sackbohrung kann entweder auf der Außenseite der Raumecke 19 oder auf der Innenseite derselben beginnen und sich bis zu gewisser Tiefe durch die zusammengefügten Stabelemente erstrecken.

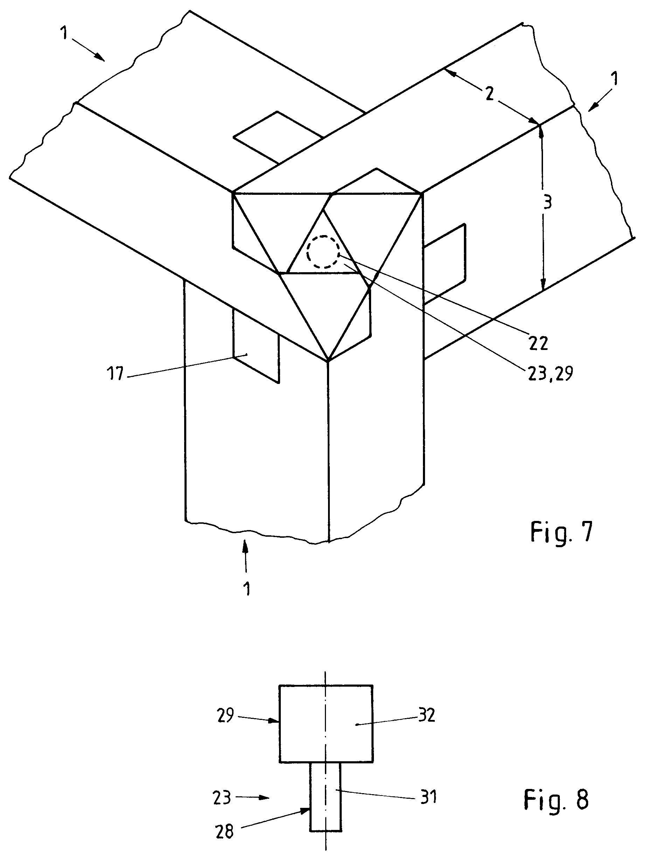

Figur 7 zeigt eine weitere Ausführungsform von Stabelementen 1, die zu einer Raumecke zusammengesteckt sind. Die Stabelemente 1 weisen sämtliche Merkmale auf, die anhand der Figuren 1 bis 3 bereits beschrieben wurden. Der Zinken 17 ist unverändert, während der Zinken 18 eine Abflachung und die Verlängerung dieses Zinkens 18 eine weitere Abflachung aufweist. Die Abflachungen liegen in einer Ebene und erstrecken sich in einem Winkel von 45° schräg. Die Abflachungen bilden eine gemeinsame Abschlußfläche 24 von dreieckförmiger Gestalt, deren Ebene sich senkrecht zu der gemeinsamen Symmetrieachse erstreckt, die von dem Koordinatensystem der drei Stabelemente 1 aufgespannt wird. Auch hier ist eine gestrichelt angedeutete Bohrung 22 vorgesehen, in die als Sicherungsmittel ein Dübel 23 eingesetzt ist, der einen dreieckförmig begrenzten Kopf 29 aufweist, dessen nach Außen gekehrte Fläche mit der Abschlußfläche 24 fluchtet.

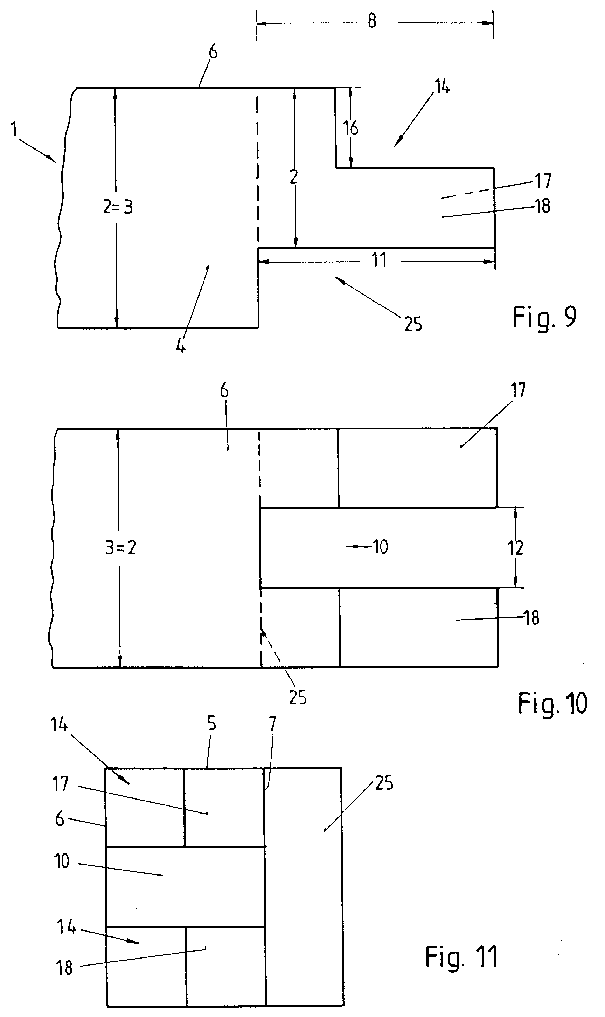

Figur 8 zeigt einen Dübel 23, der im Bereicht seines Schaftes 28 einen Zylinderbereich 31 vergleichsweise kleinen Durchmessers und im Bereich seines Kopfes 29 einen Zylinderbereich 32 vergleichsweise größeren Durchmessers aufweist. Der Zylinderbereich 32 ist vorzugsweise so ausgebildet, daß er den würfelförmigen Hohlraum 21 (Figur 4) umhüllt. Es versteht sich, daß zu einem solchen Dübel 23 gemäß Figur 8 eine abgesetzte Bohrung 22 gehört, die auf die Durchmesser der Zylinderbereiche 31 und 32 abgestimmt ist. Nach dem Zusammenfügen der Raumecke 19 aus den drei Stabelementen 1 wird die abgesetzte Bohrung 22 eingebracht und der Dübel 23 gemäß Figur 8 eingeführt. Der Dübel 23 kann aus einem im Vergleich zu den Stabelementen anderartigen oder anders gefärbten Holz bestehen. Der Dübel 23 kann mit seinem Zylinderbereich 32 ein an der Raumecke 19 nach Außen sichtbares Element bilden, dessen dekorative Wirkung und Gestalt beibehalten werden kann. Es ist aber auch möglich, den Zylinderbereich 32 flächenbündig zu den anschließenden Außenflächen der Stabelemente 1 abzuschleifen, um letztlich lediglich den würfelförmigen Hohlraum 21 auszufüllten.

Das in den Fig. 9 bis 11 dargestellte Stabelement 1 ist im Durchdringungsbereich 8 identisch ausgebildet wie das Ausführungsbeispiel der Fig. 1 bis 4. Lediglich im Anschluß an den Durchdringungsbereich 8 weist das stabförmige Element 1 quadratischen Querschnitt auf, der allerdings die Eckverbindung insoweit nicht stört. Man könnte andererseits auch sagen, ausgehend von einem quadratischen Querschnitt, daß dieser im Übergangsbereich eine Abstufung 25 aufweist, die die ersichtliche Formgebung besitzt. Im Durchdringungsbereich 8 kommt also wiederum der rechteckige Querschnitt zur Anwendung, wie dies vorher anhand der beiden Ausführungsbeispiele beschrieben worden ist. Die Verschneidungskurven der Bohrung 22 sind hier nicht dargestellt.

### BEZUGSZEICHENLISTE

- 1: - Stabelement
- 2: - Querschnittskante
- 3: - Querschnittskante
- 4: - Seitenfläche
- 5: - Seitenfläche
- 6: - Seitenfläche
- 7: - Seitenfläche
- 8: - Durchdringungsbereich
- 9: - Mittelebene
- 10: - Schlitz
- 11: - Tiefe
- 12: - Breite
- 13: - Mittelebene
- 14: - Absetzung
- 15: - Tiefe
- 16: - Breite
- 17: - Zinken
- 18: - Zinken
- 19: - Raumecke
- 20: - äußere Kante
- 21: - Hohlraum
- 22: - Bohrung
- 23: - Dübel
- 24: - Abschlußfläche
- 25: - Abstufung
- 26: - Verschneidungskurve
- 27: - Verschneidungskurve
- 28: - Schaft
- 29: - Kopf
- 30: - Achse
- 31: - Zylinderbereich
- 32: - Zylinderbereich

## Patentansprüche

1. Möbelstück aus Holz mit mindestens einer Raumecke, in der drei abgesetzte Stabelemente (1) zusammengefügt sind, die zumindest im Bereich ihrer Zusammenfügung einen identischen und rechteckigen Grundquerschnitt mit dem Verhältnis seiner Querschnittskanten (2, 3) von 2:3 aufweisen, wobei jedes Stabelement (1) endseitig parallel zu den kürzeren Querschnittskanten (2) einen durchgehenden und mittig angeordneten Schlitz (10) aufweist, dessen Tiefe (11) dem Maß der längeren Querschnittskante (3) und dessen Breite (12) einem Drittel des Maßes der längeren Querschnittskante (3) entspricht, und wobei jedes Stabelement (1) endseitig parallel zu den längeren Querschnittskanten (3) eine durchgehende und an eine längere Querschnittskante (3) anschließende Absetzung (14) aufweist, deren Tiefe (15) dem Maß der kürzeren Querschnittskante (2) und dessen Breite (16) der Hälfte des Maßes der kürzeren Querschnittskante (2) entspricht, **dadurch gekennzeichnet**, daß die abgesetzten Stabelemente (1) in zusammengefügtem Zustand eine gemeinsame, jedes Stabelement (1) anschneidende Bohrung (22) aufweisen, die in einem Winkel zu dem durch die drei Stabelemente (1) aufgespannten Achsensystem angeordnet ist, und daß ein in die Bohrung (22) einsetzbarer Dübel (23) vorgesehen ist.

2. Möbelstück nach Anspruch 1, **dadurch gekennzeichnet**, daß der Dübel (23) als Spreizdübel ausgebildet und auf den Durchmesser der Bohrung (22) abgestimmt ist.

3. Möbelstück nach Anspruch 1 oder 2, **dadurch gekennzeichnet**, daß zum Ausfüllen eines würfelförmigen Hohlraums (21) der zu einer Raumecke (19) zusammengefügten Stabelemente (1) an dem Dübel (23) ein Kopf (29) vorgesehen ist.

4. Möbelstück nach Anspruch 1, **dadurch gekennzeichnet**, daß die Bohrung (22) mit ihrer Achse in dem Mittelwinkel zu dem durch die drei Stabelemente (1) aufgespannten Achsensystem angeordnet ist.

5. Möbelstück nach Anspruch 1 oder 4, **dadurch gekennzeichnet**, daß die Bohrung (22) durchgehend oder als Sackloch vorgesehen ist.

6. Möbelstück nach Anspruch 1 oder 5, **dadurch gekennzeichnet**, daß die Bohrung (22) als abgesetzte Bohrung ausgebildet ist, wobei der Bohrungsteil mit dem kleineren Durchmesser zur Aufnahme des Schaftes (28) des Dübels (23) und der Bohrungsteil mit dem größeren Durchmesser zur Ausnahme des Kopfes (29) des Dübels (23) vorgesehen ist.

7. Möbelstück nach Anspruch 6, **dadurch gekennzeichnet**, daß der Bohrungsteil mit dem größeren Durchmesser der Außenseite der Raumecke (19) zugekehrt angeordnet ist.

8. Möbelstück nach Anspruch 1 oder 5, **dadurch gekennzeichnet**, daß die die Raumecke (19) bildenden Stabelemente (1) außen in einem Winkel von 45° abgeflacht sind, so daß sich im zusammengefügten Zustand eine gemeinsame ebene Abschlußfläche (24) ergibt.

9. Möbelstück nach einem der Ansprüche 1 bis 8, **dadurch gekennzeichnet**, daß die Stabelemente (1) so zusammengefügt sind, daß in der Raumecke (19) die längeren Querschnittskanten (3) im Rechtsdrehsinn oder im Linksdrehsinn aufeinander folgen.

10. Möbelstück nach Anspruch 6 oder 7, **dadurch gekennzeichnet**, daß der für die abgesetzte Bohrung (22) bestimmte Dübel (23) zwei Zylinderbereiche (31, 32) mit entsprechenden unterschiedlichen Durchmessern aufweist.
